# EUROPEAN PATENT SPECIFICATION

(11) **EP 1 161 818 B1**
(45) Date of publication and mention of the grant of the patent: **27.09.2006**
(21) Application number: 99910390.6
(22) Date of filing: 17.03.1999
(51) Int. Cl.: H04L 12/56

(54) **METHOD AND APPARATUS FOR PERFORMING PACKET SYNCHRONIZED SWITCH-OVER**
VERFAHREN UND VORRICHTUNG ZUR DURCHFÜHRUNG EINER PAKET-SYNCHRONEN UMSCHALTUNG
PROCEDE ET APPAREIL DE COMMUTATION SYNCHRONISEE DE PAQUETS

(43) Date of publication of application: 12.12.2001
(73) Proprietor: Nokia Corporation, 02150 Espoo (FI)
(72) Inventor: VÄÄNÄNEN, Pasi, Somerville, MA 02143 (US); SOIRINSUO, Timo, Somerville, MA 02143 (US)
(74) Representative: Söderholm, Sampsa Petteri
(86) International application number: PCT/FI1999/000199
(87) International publication number: WO 2000/056020

(56) References cited:
- EP-A2- 0 880 298
- GB-A- 2 323 744
- PATENT ABSTRACTS OF JAPAN & JP 09 321 781 A (OKI ELECTRIC IND CO LTD) 12 December 1997

## Description

### BACKGROUND OF THE INVENTION

### 1. Field of the Invention.

This invention relates in general to cell relay devices, and more particularly to a method and apparatus for performing switch-over in an intermediate cell switching entity that eliminates packet loss by preventing frame integrity from being broken during the switch-over.

### 2. Description of Related Art.

Cell relay refers to any data communications technology that is based on transmission of small, fixed-length data units called cells. Cells are made up of a header field, containing address information, and an information field, carrying user data. With cell relay, a cell converter takes the constant-bit-rate streams of voice and video devices and the variable-bit-rate streams of data devices and converts them into cells. These cells are then routed across a cell relay network to multiple destinations, based on the address information in the headers. At each destination, other cell converters recreate the bit streams and deliver them to the user devices. With cell relay, separate applications can be consolidated onto a single, higher speed network, improving overall price/performance. Furthermore, because a cell relay network is based on switching fixed-length data units, it is possible to build high performance switching fabrics supporting burst rates of hundreds of megabits per second.

Asynchronous Transfer Mode (ATM) is just one example of a cell-based switching and multiplexing technology. ATM is designed to be a general-purpose, connection-oriented transfer mode for a wide range of services. Today, ATM is being used on local area networks (LANs), metropolitan area networks (MANs) and wide area networks (WANs). As a result, ATM is rapidly becoming the premier protocol for many communication and networking applications. With ATM installed on LANs, MANs and WANs, all types of voice, data and video traffic can operate together seamlessly. No other protocol offers this seamless integration of information, making ATM a catalyst for technological advances in telecommunications, multimedia and other markets. An example of a network using ATM is disclosed in the European patent application EP-A-0 880 298.

ATM handles both connection-oriented traffic and connectionless traffic through the use of adaptation layers. Typically, ATM virtual connections operate at either a Constant Bit Rate (CBR) or a Variable Bit Rate (VBR). Each ATM cell sent into the network contains addressing information that establishes a virtual connection from origination to destination. All cells are then transferred, in sequence, over this virtual connection. ATM provides either Permanent or Switched Virtual Circuits (PVCs or SVCs). ATM is asynchronous because the transmitted cells need not be periodic as time slots of data as in Synchronous Transfer Mode (STM).

ATM offers the potential to standardize on one network architecture, which defines the multiplexing and switching method. ATM also supports multiple Quality of Service (QoS) classes for differing application requirements on delay and loss performance. Thus, the vision of ATM is that an entire network can be constructed using ATM and ATM Application Layer (AAL) switching and multiplexing principles to support a wide range of all services, such as:
- Voice
- Packet data (Switched MultiMegabit Data Service (SMDS), Internet Protocol (IP), Frame Relay (FR)
- Video
- Imaging
- Circuit emulation
ATM also provides bandwidth-on-demand through the use of SVCs, and also supports LAN-like access to available bandwidth.

ATM standards define a fixed-size cell with a length of 53 octets (or bytes) comprised of a 5-octet header and a 48-octet payload. With a relatively small cell size, ATM is a compromise between the long frames generated in data communications and the short, repetitive transmissions required for voice communications, video transmission and other isochronous data transmission.

The bits in the cells are transmitted over the transmission path in a continuous stream. Cells are mapped into a physical transmission path, such as the North American Digital Signal Level 1 (DS1), DS3, or SONET; International Telecommunications Union - Telecommunications standardization sector (ITU-T) SDH standards; and various other local fiber and electrical transmission payloads.

All information is switched and multiplexed in an ATM network using these fixed-length cells. The cell header identifies the destination, cell type, and priority. Fields of the cell header include: the Virtual Path Identifier (VPI) and Virtual Circuit Identifier (VCI) which hold local significance only, and identify the destination. The Generic Flow Control (GFC) field allows a multiplexer to control the rate of an ATM terminal. The Payload Type (PT) indicates whether the cell contains user data, signaling data, or maintenance information. The Cell Loss Priority (CLP) bit indicates the relative priority of the cell. Lower priority cells may be discarded before priority cells during congested intervals.

Because of its critical nature, the cell includes a Header Error Check (HEC) which detects and corrects errors in the header. The payload field is passed through the network intact, with no error checking or correction. ATM relies on higher layer protocols to perform error checking and correction on the payload. The fixed cell size simplifies the implementation of ATM switches and multiplexers while providing very high speeds.

When using ATM, longer packets cannot delay shorter packets as in other switched implementations because long packets are chopped up into many cells. This enables ATM to carry Constant Bit Rate (CBR) traffic such as voice and video in conjunction with Variable Bit-Rate (VBR) data traffic, potentially having very long packets within the same network.

Three major concepts in ATM are: the transmission path, the Virtual Path (VP), and, optionally, the Virtual Circuit (VC). These form the basic building blocks of ATM. A physical transmission path contains one or more virtual paths (VPs), while each virtual path contains one or more virtual circuits (VCs). Thus, multiple virtual circuits can be trunked on a single virtual path. Switching can be performed on either a transmission path, virtual path, or virtual circuit (i.e., channel) level.

This capability to switch down to a virtual circuit level is similar to the operation of a Private or Public Branch Exchange (PBX) or telephone switch in the telephone world. In the PBX/switch, each channel within a trunk group (path) can be switched. Devices which perform VC connections are commonly called VC switches because of this analogy with telephone switches. Transmission networks use a cross-connect, which is basically a space division switch, or effectively an electronic patch panel. ATM devices which connect VPs are commonly called VP cross-connects by analogy with the transmission network.

At the ATM layer, users are provided a choice of either a Virtual Path Connection (VPC) or a Virtual Channel Connection (VCC). VPCs are switched based upon the Virtual Path Identifier (VPI) value only. The users of the VPC may assign the VCCs within that VPI transparently since they follow the same route. VCCs are switched upon the combined VPI and Virtual Circuit Identifier (VCI) value.

Both VPIs and VCIs are used to route cells through the network. It should be noted that VPI and VCI values must be unique on a specific transmission path (TP). Thus, each transmission path between two network devices (such as ATM switches) uses VPIs and VCIs independently.

Accordingly, ATM networks will be used quite extensively for data transfer. However, a data network can be built on top of an ATM network so that ATM is used as a technology to interconnect those sites to form an overlay network. Those skilled in the art will recognize that a data network scenario is mentioned herein as an example only. Thus, the present invention is not meant to be limited to data networks.

As suggested above, some data networks are connectionless in nature and run dynamic routing protocols to determine the path through the network. The path that each data flow takes is subject to change for several reasons including the cases where the previous path is not available any more or it has for some reason become non-optimal. The changes in the data network routing will reflect into the underlying ATM network and may generate a need for reconfiguring of connections.

For an ATM switch, a connection modification may refer to the modification of bandwidth resources associated with the connection. However, in this case, the endpoint may remain the same. Nevertheless, a connection modification may also refer to a situation where one of ATM virtual channel link (VCL) termination points, either incoming or outgoing, will be changed in the switch. In this latter case, resources may be the same for both the old and the new connection. In a special case of a connection that is terminated in the switch, the connection topology change is internal to the switch and results in changing the point that handles AAL frames, i.e. AAL connection termination point. Hereinafter, the term switch-over is used to indicate connection modifications where one of the ATM virtual channel link termination points is changed in a switch. Resource allocation will be assumed to be unchanged.

ATM is a scaleable standard that does not specify requirements for transmission rates, framing and physical layers. Rather, ATM switching and ATM networks refer only to the handling of cells. ATM does not dictate the content of information carried in cells. Broadband networks must develop guarantees on bandwidth, delay and jitter to support a wide variety of ATM applications.

As mentioned earlier, ATM cells have a fixed length payload field that is 48 octets. However, data packets that are carried in ATM cells are normally longer than 48 octets and are not integral multiple of 48 octets. Therefore, the ATM Adaptation Layer (AAL) is used to assemble and reassemble those packets into/from cells.

However, if for one reason or the other, some cells are lost or misrouted in the network, the whole frame associated with the lost cell will be worthless. In order to eliminate packet loss resulting from connection changes, the switch-over has to be performed so that frame integrity is not broken. This problem is encountered with all types of cell relay systems.

It can be seen then that there is a need to add additional intelligence to an intermediate switch to prevent packet loss at the switch-over.

It can also be seen that there is a need for a method and apparatus for performing cell switch-over that eliminates packet loss by preventing frame integrity from being broken during the switch-over.

### SUMMARY OF THE INVENTION

To overcome the limitations in the prior art described above, and to overcome other limitations that will become apparent upon reading and understanding the present specification, the present invention discloses a method and apparatus for performing packet synchronized switch-over in ATM.

The present invention solves the above-described problems by preventing frame integrity from being broken.

A system in accordance with the principles of the present invention receives a switch-over request soliciting a change from a first virtual channel link to a second virtual channel link, monitors the state information to identify the occurrence of a frame completed state and performs the switch-over from the first virtual channel link to the second virtual channel link when the frame completed state is detected.

Other embodiments of a system in accordance with the principles of the invention may include alternative or optional additional aspects. One such aspect of the present invention is that the state information is a middle of frame state until the frame completed state occurs.

Another aspect of the present invention is that identifying a frame completed state includes detecting whether a current cell being received has an end of frame indication.

Another aspect of the present invention is that the switch-over request includes an ingress switch-over request for changing the first and second virtual channel links at an egress side of the switch.

Another aspect of the present invention is that determining a frame completed state includes processing the forwarding of the frame through the first virtual channel link until the frame completed state is detected.

Another aspect of the present invention is that the switch-over request includes an egress switch-over request for changing the first and second virtual channel links at an ingress side of the switch.

Yet another aspect of the present invention is that cells are received on the first and second virtual channel links at the ingress side of the switch.

Another aspect of the present invention is that all cells coming from the second virtual channel link are discarded until a frame complete state is detected on the first virtual channel link.

Another aspect of the present invention is that all cells on the first virtual channel link are discarded after the frame completed state is detected on the first virtual channel link.

Another aspect of the present invention is that the cells being received on the first and second virtual channel links comprise separate connection identification.

Still another aspect of the present invention is that the connection identification includes a virtual path identifier, and a virtual channel identifier.

Another aspect of the present invention is that the connection identification further includes a routing tag.

Another aspect of the present invention is that the monitoring is performed at the ingress side of the switch.

Another aspect of the present invention is that the state information of the second virtual channel link is established.

These and various other advantages and features of novelty which characterize the invention are pointed out with particularity in the claims annexed hereto and form a part hereof. However, for a better understanding of the invention, its advantages, and the objects obtained by its use, reference should be made to the drawings which form a further part hereof, and to accompanying descriptive matter, in which there are illustrated and described specific examples of an apparatus in accordance with the invention.

### BRIEF DESCRIPTION OF THE DRAWINGS

Referring now to the drawings in which like reference numbers represent corresponding parts throughout:
Fig. 1 illustrates the seven layer Open Systems Interconnection (OSI) model;
Fig. 2 illustrates four Broadband-Integrated Services Digital Network/Asynchronous Transfer Mode (B-ISDN/ATM) layers along with the sublayer structure of the ATM Adaptation Layer (AAL) and Physical (PHY) layer;
Fig. 3 illustrates the mapping of the B-ISDN layers to the OSI layers and the sublayers of the PHY, ATM, and ATM Adaptation layers;
Fig. 4 illustrates the construction of a CPCS-PDU that is later segmented into a series of 48 octet ATM cells;
Fig. 5 illustrates an AAL-5 frame being broken down into ATM cells;
Fig. 6 illustrates the format for an ATM cell;
Fig. 7 illustrates an ingress switch-over;
Fig. 8 illustrates an egress switch-over;
Fig. 9 illustrates the points of switch-over according to the present invention;
Fig. 10 illustrates a flow chart of the switch-over procedure according to the present invention; and
Fig. 11 illustrates a block diagram of an ATM switch according to the present invention.

### DETAILED DESCRIPTION OF THE INVENTION

In the following description of the exemplary embodiment, reference is made to the accompanying drawings which form a part hereof, and in which is shown by way of illustration the specific embodiment in which the invention may be practiced. It is to be understood that other embodiments may be utilized as structural changes may be made without departing from the scope of the present invention.

The present invention provides a method and apparatus for performing switch-over in an intermediate entity that eliminates packet loss by preventing frame integrity from being broken. The present invention receives switch-over requests soliciting a change from a first virtual channel link to a second virtual channel link. After the receipt of a switch-over request, state information for identifying the occurrence of a frame completed state is monitored. The switch-over from the first virtual channel link to the second virtual channel link is performed when the frame completed state occurs. In one particular embodiment, the frame completed state is detected by determining whether a current cell being received has an AUU set. The invention eliminates packet loss by maintaining layer frame integrity for both ingress and egress switch-over requests.

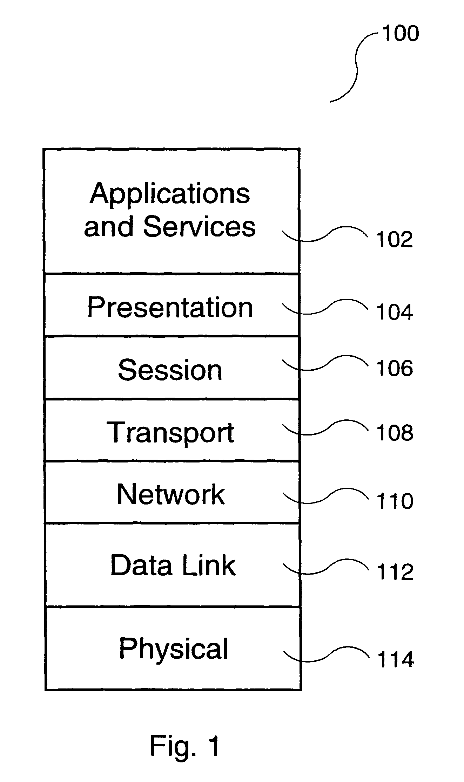

As will be appreciated by those skilled in the art, communication networks (e.g., ATM) and their operations can be described according to the Open Systems Interconnection (OSI) model 100 which includes seven layers including an application 102, presentation 104, session 106, transport 108, network 110, link 112, and physical 114 layer as illustrated in Fig. 1. The OSI model 100 was developed by the International Organization for Standardization (ISO) and is described in "The Basics Book of OSI and Network Management" by Motorola Codex from Addison-Wesley Publishing Company, Inc., 1993 (First Printing September 1992).

Each layer of the OSI model 100 performs a specific data communications task, a service to and for the layer that precedes it (e.g., the network layer provides a service for the transport layer). The process can be likened to placing a letter in a series of envelopes before it's sent through the postal system. Each succeeding envelope adds another layer of processing or overhead information necessary to process the transaction. Together, all the envelopes help make sure the letter gets to the right address and that the message received is identical to the message sent. Once the entire package is received at its destination, the envelopes are opened one by one until the letter itself emerges exactly as written.

In a data communication transaction, however, each end user is unaware of the envelopes, which perform their functions transparently. Each time that user application data passes downward from one layer to the next layer in the same system, more processing information is added. When that information is removed and processed by the peer layer in the other system, it causes various tasks (error correction, flow control, etc.) to be performed.

The ISO has specifically defined all seven layers, which are summarized below in the order in which the data actually flow as they leave the source:
Layer 7, the application layer 102, provides for a user application (such as getting money from an automatic bank teller machine) to interface with the OSI application layer 102. That OSI application layer 102 has a corresponding peer layer in the other open system, the bank's host computer.
Layer 6, the presentation layer 104, makes sure the user information (a request for $50 in cash to be debited from your checking account) is in a format (i.e., syntax or sequence of ones and zeros) the destination open system can understand.
Layer 5, the session layer 106, provides synchronization control of data between the open systems (i.e., makes sure the bit configurations that pass through layer 5 106 at the source are the same as those that pass through layer 5 106 at the destination).
Layer 4, the transport layer 108, ensures that an end-to-end connection has been established between the two open systems and is reliable (i.e., layer 4 108 at the destination confirms the request for a connection, so to speak, that it has received from layer 4 108 at the source).
Layer 3, the network layer 110, provides routing and relaying of data through the network (among other things, at layer 3 110 on the outbound side an address gets slapped on the envelope which is then read by layer 3 110 at the destination).
Layer 2, the data link layer 112, includes flow control of data as messages pass down through this layer in one open system and up through the peer layer in the other open system.
Layer 1, the physical interface layer 114, includes the ways in which data communications equipment is connected mechanically and electrically, and the means by which the data move across those physical connections from layer 1 114 at the source to layer 1 114 at the destination.

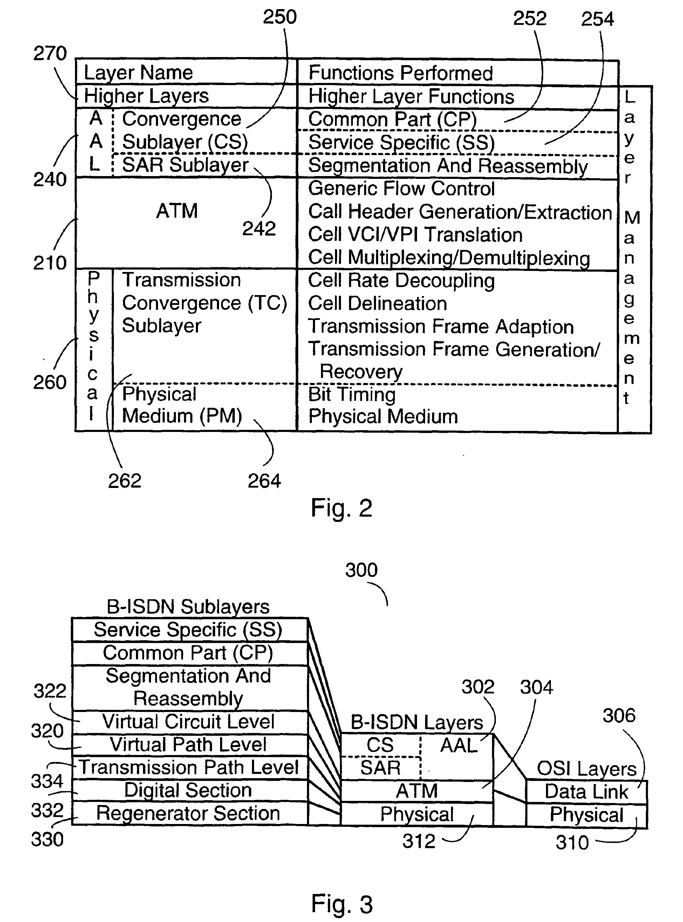

This same layering principals have been applied to cell relay communication networks of which ATM is one example. Fig. 2 shows four Broadband-Integrated Services Digital Network/Asynchronous Transfer Mode (B-ISDN/ATM)layers 210 along with the sublayer structure of the ATM Adaptation Layer (AAL) 240 and Physical (PHY) layer 260. Starting from the bottom, the Physical layer 260 has two sublayers: Transmission Convergence (TC) 262 and Physical Medium (PM) 264. The PM sublayer 264 interfaces with the actual physical medium and passes the recovered bit stream to the TC sublayer. The TC sublayer 262 extracts and inserts ATM cells within the Plesiochronous or Synchronous (PDH or SDH) Time Division Multiplexed (TDM) frame and passes these to and from the ATM layer, respectively.

The ATM layer 210 performs multiplexing, switching, and control actions based upon information in the ATM cell header and passes cells to, and accepts cells from, the ATM Adaptation Layer (AAL) 240. The AAL 240 has two sublayers: the Segmentation And Reassembly (SAR) sublayer 242 and the Convergence Sublayer (CS) 250. The CS 250 is further broken down into Common Part (CP) 252 and Service-Specific (SS) 254 components. The AAL 240 passes Protocol Data Units (PDUs) to and accepts PDUs from higher layers 270. PDUs may be of variable length, or may be of fixed length different from the ATM cells length.

The Physical layer 260 corresponds to layer 1 114 in the OSI model illustrated in Fig. 1. The ATM layer 210 and AAL 240 correspond to parts of OSI layer 2 112, but the address field of the ATM cell header has a network-wide connotation that is like OSI layer 3 110. The B-ISDN and ATM protocols and interfaces make extensive use of the OSI concepts of layering and sublayer.

Fig. 3 illustrates the mapping 300 of the B-ISDN layers to the OSI layers and the sublayers of the PHY, ATM, and ATM Adaptation layers. Fig. 3 illustrates that the AAL layer 302 and ATM layer 304 do not match exactly with the data link layer 306 of the OSI model. Furthermore, Fig. 3 illustrates that the functions of the physical layer 310 of the OSI model do not map precisely to the physical layer 312 of the B-ISDN model.

The following describes the Asynchronous Transfer Mode (ATM) layer 304. To construct and interpret ATM Virtual Paths (VPs) and Virtual Circuits (VCs), the ATM layer includes a virtual path sublayer 320 and virtual circuit layer 322. The physical layer 312 is composed of three levels: regenerator section 330, digital section 332, and transmission path 334. At the ATM layer 304, the transmission path is the main area of focus because this is essentially the TDM payload that connects ATM devices. Generically, an ATM device may be either an endpoint or a connecting point for a VP or VC. A Virtual Path Connection (VPC) or a Virtual circuit Connection (VCC) exists only between endpoints. A VP link or a VC link can exist between an endpoint and a connecting point or between connecting points. A VPC or VCC is an ordered list of VP or VC links, respectively, that define a unidirectional flow of ATM cells from one user to one or more other users.

Several key functions are performed by each sublayer of the ATM layer 304. The ATM layer 304 provides many functions, including:
- Cell Construction
- Cell Reception and Header Validation
- Cell Relaying, Forwarding, and Copying Using the VPI/VCI
- Cell Multiplexing and Demultiplexing Using the VPI/VCI
- Cell Payload Type Discrimination
- Interpretation of pre-defined Reserved Header Values
- Cell Loss Priority Processing
- Support for Multiple QoS Classes
- Usage Parameter Control (UPC)
- Explicit Forward Congestion Indication (EFCI)
- Generic Flow Control
- Connection Assignment and Removal

The attributes of the service class for AAL 302 are the timing relationships required between the source and destination, whether the bit rate is constant or variable, and whether the connection mode is connection-oriented or connectionless. The four AAL service classes are as follows:
- Class A -- constant bit-rate (CBR) service with end-to-end timing, connection-oriented
- Class B -- variable bit-rate (VBR) service with end-to-end timing, connection-oriented
- Class C -- variable bit-rate (VBR) service with no timing required, connection-oriented
- Class D -- variable bit-rate (VBR) service with no timing required, connectionless

AAL-1 through AAL-4 were initially defined to directly map to the AAL service classes A through D. AAL-5 was conceived by the computer industry in response to perceived complexity and implementation difficulties in the AAL-3/4. While the AAL-3/4 provides a rich set of services, it does so at the expense of additional protocol overhead and processing. AAL-5, originally coined the Simple and Efficient Adaptation Layer (SEAL), was designed to provide similar services at lower overhead. AAL-5 takes advantage of the ATM End of Message (EOM) flag to signal the end of a single message. Significant overhead is eliminated by removing the SAR header and trailer.

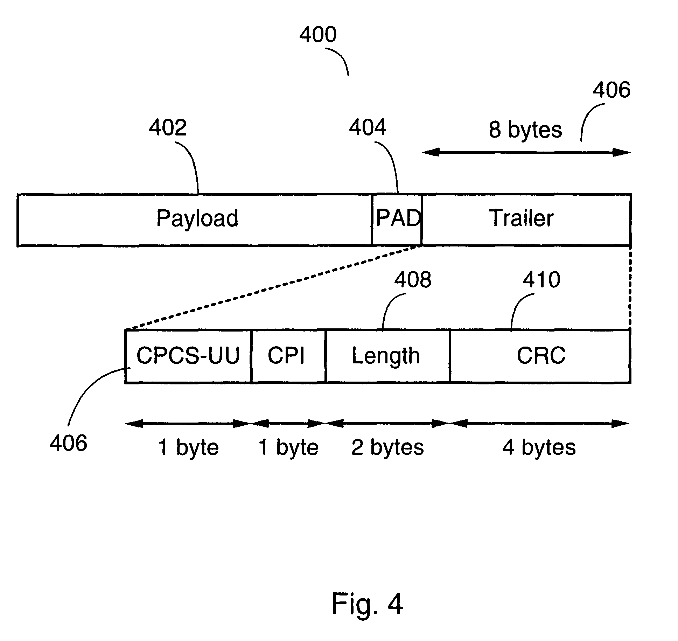

Fig. 4 illustrates the construction of an AAL-5 CPCS-PDU 400 that can carry a payload 402 of between 1 and 65535 octets. The CPCS-PDU 400 also includes a padding field 404 and an 8-byte trailer 406. The padding field 404 is of a variable length chosen such that the entire CPCS-PDU 400 is an exact multiple of 48 so that it can be directly segmented into cell payloads. The User-to-User (UU) information 406 is conveyed between AAL users transparently. The length field 408 identifies the length of the CPCS-PDU payload 402 so that the PAD 404 can be removed. Since 16 bits are allocated to the length field 408, the maximum payload length is 2¹⁶-1 = 65,535 octets. The CRC 410 detects errors in the CPCS-PDU 400.

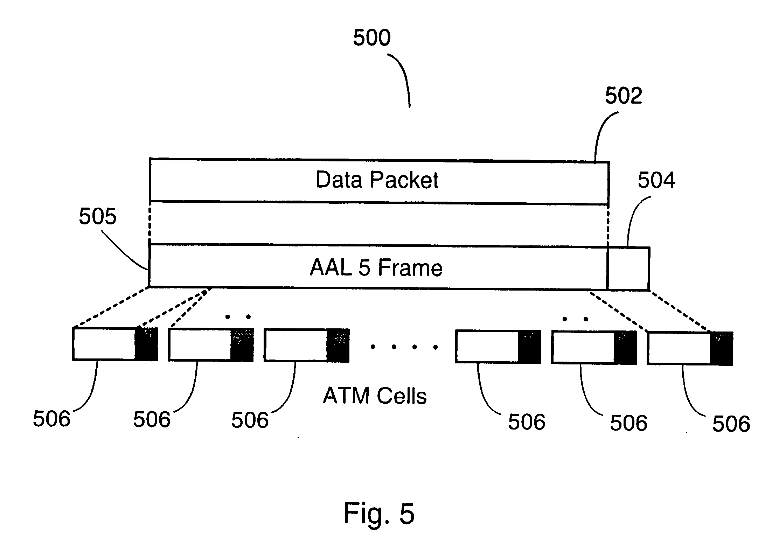

Fig. 5 illustrates an AAL-5 frame being broken down into ATM cells 500. Initially, a data packet 502 is received at the ATM Adaptation Layer where a header 504 is attached to the data packet to form the AAL-5 PDU 505. The AAL-5 PDU 505 is then segmented into 48 octet ATM cells 506.

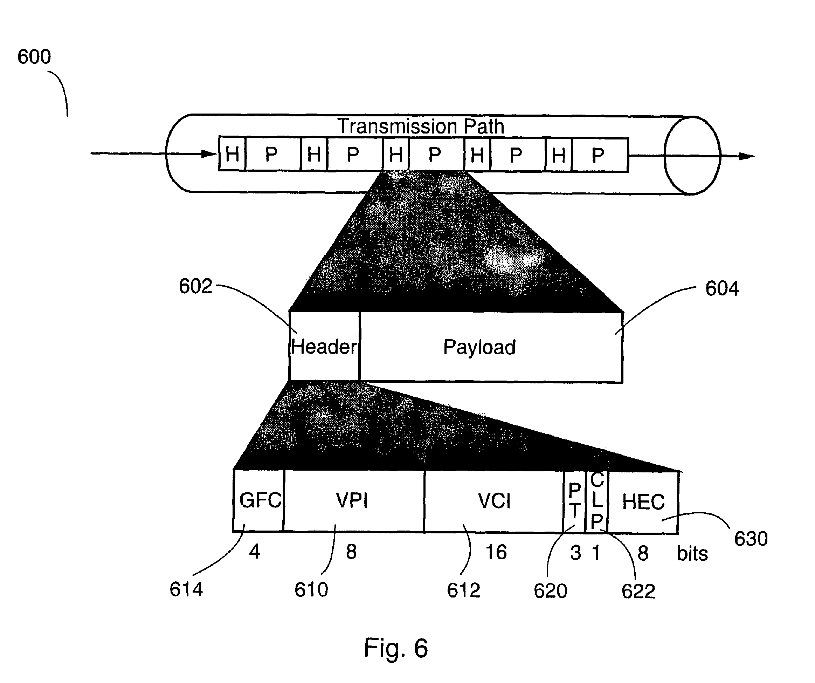

Fig. 6 illustrates the format 600 for an ATM cell. The ATM standards define a fixed-size cell with a length of 53 octets comprised of a 5 octet header 602 and a 48 octet payload 604. The bits for a packet are transmitted over the transmission path in a continuous stream. All information is switched and multiplexed in an ATM network in these fixed-length cells. The cell header 602 identifies the destination, cell type and priority. The Virtual Path Identifier (VPI) 610 and Virtual Circuit Identifier (VCI) 612 hold local significance only, and identify the destination. The Generic Flow Control (GFC) field 614 allows a multiplexer to control the rate of an ATM terminal. The Payload Type (PT) 620 indicates whether the cell contains user data, signaling data, or maintenance information. The Cell Loss Priority (CLP) 622 indicates the relative priority of the cell. Lower priority cells are discarded before higher priority cells during congested intervals. Finally, a Header Error Check (HEC) 630 is provided to detect and correct errors in the header.

The Virtual Circuit Identifier (VCI) 612 in the cell header identifies a single VC on a particular Virtual Path (VP). Switching at a VC connecting point is done based upon the combination of VP and VCI 612. A VC link is defined as a unidirectional flow of ATM cells with the same VCI 612 between a VC connecting point and either a VC endpoint or another VC connecting point. A VC endpoint also is called an ATM Service Access Point (SAP).

Virtual Paths (VPs) define an aggregate bundle of VCs between VP endpoints. A Virtual Path Identifier (VPI) 610 in the cell header identifies a bundle of one or more VCs. A VP link provides unidirectional transfer of cells with the same VPI 610 between VP endpoints or connecting points. Switching at a VP connecting point is done based upon the VPI 610. A VP link is defined as a VP between a VP connecting point and either a VP endpoint or another VP connecting point.

Typically, cell relay in general, and ATM in particular require the preservation of cell sequence integrity. This means that cells are delivered to intermediate connecting points and the destination endpoint in the same order in which they were transmitted. However, the path that each data flow takes is subject to change for several reasons, including the cases where the previous path is not available any more or where the path has become non-optimal.

The changes in the data network routing will reflect into the underlying network and may generate a need for reconfiguring of connections. Depending on the point where changes in the switch-over control is introduced, switch-over can be divided into ingress and egress switch-over, wherein changes internal to the switch is a special case of the former category.

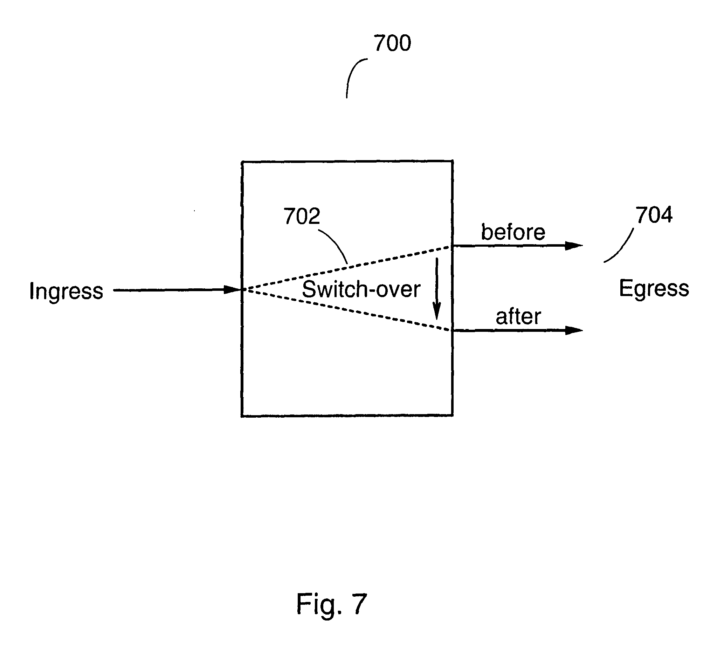

Fig. 7 illustrates an ingress switch-over process 700. The ingress switch-over 702 occurs where the intermediate entity, such as an ATM switch, changes the egress VCL 704. This type of switch-over 700 is prominent where routing changes in the overlaying network.

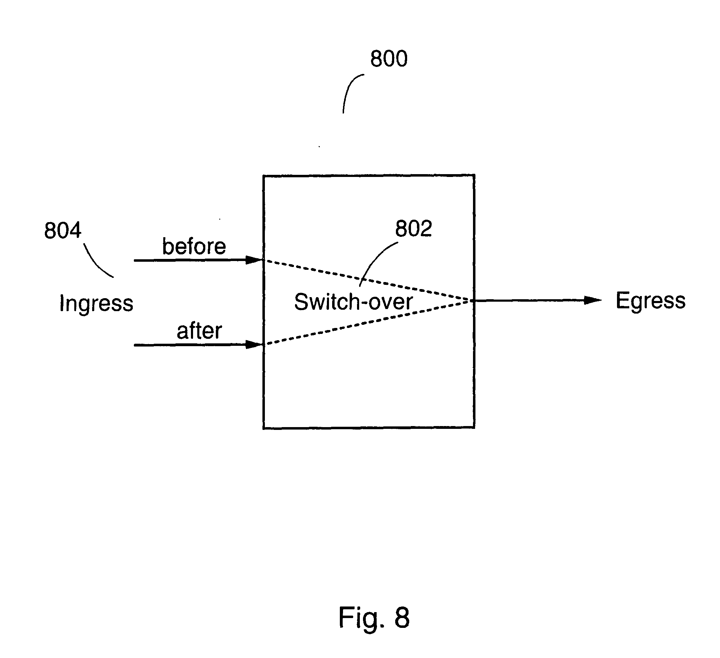

Fig. 8 illustrates an egress switch-over process 800. The egress switch-over 802 occurs where the intermediate entity changes the ingress VCL 804. An egress switch-over occurs, for example, when traffic is originated from wireless terminal and hand-off takes places.

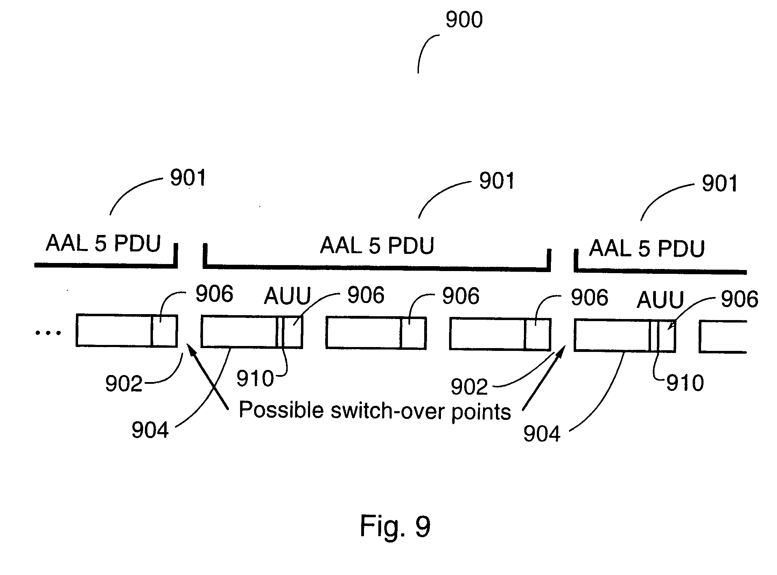

Fig. 9 illustrates the points of switch-over 900 for an ATM network according to the present invention. While ATM is used to describe the invention, those skilled in the art will recognize that the invention is likewise applicable to any cell relay protocol which provides an end of frame indication in the last cell of the frame.

Fig. 9 demonstrates that the integrity of AAL-5 packets 901 can be maintained by timing the switch-over so that switch-over 902 happens right after a cell 904 having a last cell indication set, e.g., the AUU or user signaling bit. The least significant bit of the Payload Type (PT) field provides the AUU indication. ATM entities only check the value of ATM header 906 and act on that value. As a consequence of this, a generic solution can be based on the AUU fields 910.

Data communications relies mostly on AAL-5, which uses the AUU field 910 of the ATM header 906 to indicate AAL-5 PDU boundaries, i.e. which cells belong to which packet within one VCC. If this AUU indication 910 is set in the ATM header, then the cell carrying this indication is the last cell of a frame 901.

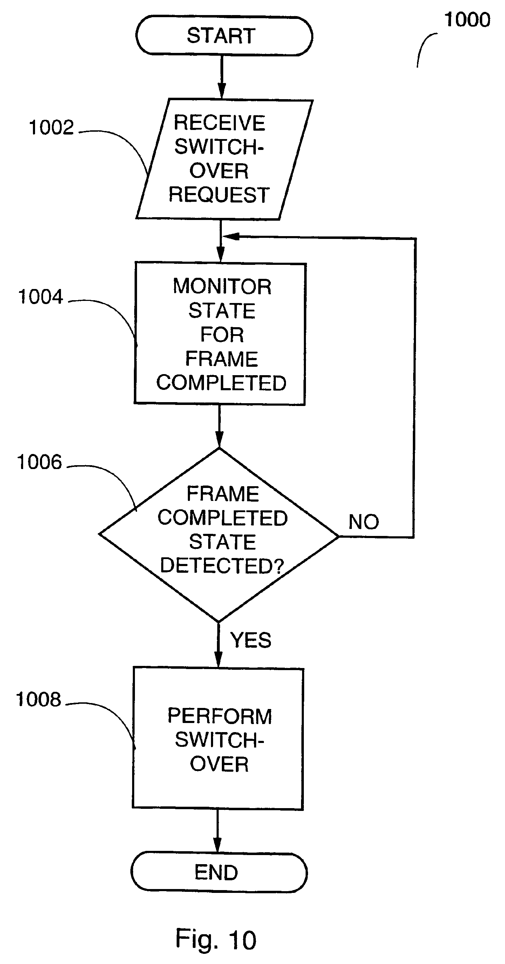

Fig. 10 illustrates a flow chart 1000 of the switch-over procedure according to the present invention. A switch-over request is received 1002 soliciting a change from a first virtual channel link to a second virtual channel link. Then state information is monitored 1004 to identify the occurrence of a frame completed state.

For an ingress switch-over, the ingress side of the switch provides state information on each incoming VCL. The state of the VCL is either Middle Of the Frame (MOF) or Frame Completed (FC). For the Middle Of the Frame (MOF) state, the ingress side has either sent or is currently sending towards egress a cell which has no AUU indication set. For the Frame Completed (FC) state, the last cell sent or the cell that is currently being sent towards egress had an AUU set. The Frame Completed (FC) state is the default state.

For egress switch-over, the egress port will monitor the "new" channel after being notified about switch-over. Both incoming VCLs have a separate ATM layer identification, i.e., VPI/VCI and possibly a routing tag, at the outgoing side. The switch will discard all cells coming from that connection until it receives a cell with AUU set.

Once the frame completed state is detected 1006, switch-over from the first virtual channel link to the second virtual channel link is performed 1008.

For an ingress switch-over, if the Middle of Frame state occurs, the switch will process the switch-over request, but postpone carrying out the switch-over before entering into Frame Completed state. If the Frame Completed state is detected, the switch-over request is processed and carried out immediately. It is assumed that switch-over is cell synchronous by default.

For an egress switch-over, the ATM switch will send out all cells coming from the "new" connection and discard all cells received on the "old" channel.

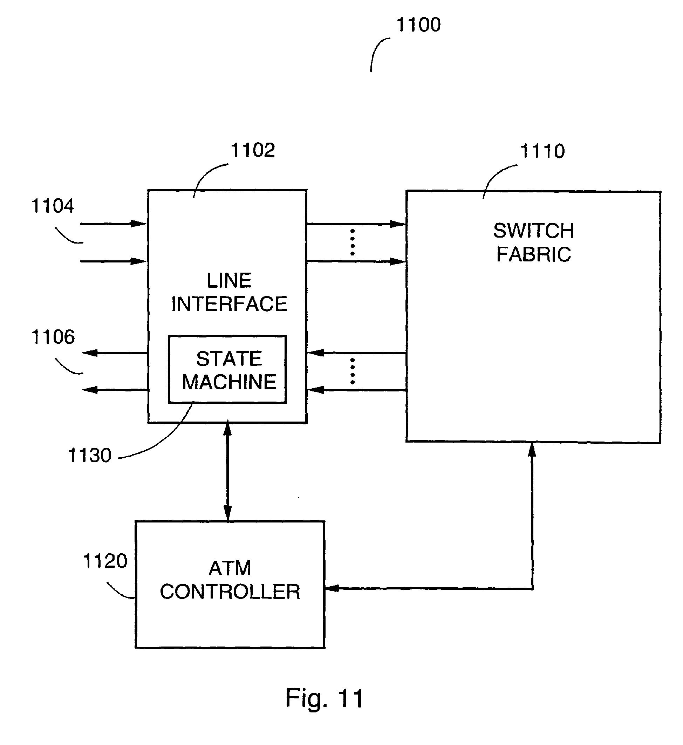

Fig. 11 illustrates a block diagram 1100 for an ATM switch according to the present invention. The ATM switch includes a line interface device 1102 having a plurality of input and output ports connected to a plurality of input 1104 and output 1106 virtual channel links. A switch fabric 1110 is operatively coupled to the line interface device 1102 for routing incoming cells received from incoming virtual channel links 1104 to outgoing virtual channel links 1106. An ATM switch controller 1120 receives the switch-over request soliciting a change from a first virtual channel link to a second virtual channel link. The line interface 1102 includes a state machine 1130 for monitoring state information to identify the occurrence of a frame completed state. Those skilled in the art will recognize that the state information of the frame may be determine using methods other than a state machine. The controller 1120 initiates a switch-over from the first virtual channel link to the second virtual channel link when the controller 1120 requests that a second virtual channel link be established. The switch-over is carried out when the Frame Complete (FC) has been identified.

The foregoing description of the exemplary embodiment of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

## Claims

1. A method of performing packet synchronized switch-over for virtual channel links of an intermediate cell relay entity, **characterised by**:
receiving a switch-over request, the switch-over request soliciting a change from a first virtual channel link to a second virtual channel link;
monitoring state information to identify the occurrence of a frame completed state of a frame; and
performing switch-over (702, 802) from the first virtual channel link to the second virtual channel link after the frame completed state occurs.

2. The method of claim 1 wherein the state information is a middle of frame state until the frame completed state occurs.

3. The method of claim 1 wherein the step of monitoring state information to identify the occurrence of a frame completed state comprises the step detecting whether a current cell being received has a last cell indicator set.

4. The method of claim 3 wherein the last cell indicator comprises an AUU bit.

5. The method of claim 1 wherein the switch-over request comprises an ingress switch-over request for changing the first and second virtual channel links at an egress side of the entity.

6. The method of claim 5 wherein the step of monitoring state information to identify the occurrence of a frame completed state further comprises the step of processing the forwarding of the frame through the first virtual channel link until the frame completed state is detected.

7. The method of claim 1 wherein the switch-over request comprises an egress switch-over request for changing the first and second virtual channel links at an ingress side of the entity.

8. The method of claim 7 further comprising the step of receiving cells on the first and second virtual channel links at the ingress side of the switch.

9. The method of claim 8 further comprising the step of discarding all cells coming from the second virtual channel link until a frame complete state is detected on the first virtual channel link.

10. The method of claim 8 further comprises the step of discarding all cells on the first virtual channel link after the frame completed state is detected on the first virtual channel link.

11. The method of claim 8 wherein the cells being received on the first and second virtual channel links comprise separate connection identification.

12. The method of claim 11 wherein the connection identification comprises an ATM layer identification.

13. The method of claim 11 wherein the ATM layer identification comprises a virtual path identifier, and a virtual channel identifier.

14. The method of claim 13 wherein the ATM layer identification further comprises a routing tag.

15. The method of claim 7 wherein the step of monitoring state information to identify the occurrence of a frame completed state further comprises the step of performing the monitoring at the ingress side of the entity.

16. The method of claim 15 wherein the step of performing the monitoring at the ingress side of the switch further comprises the step of establishing the state information of the second virtual channel link.

17. A cell relay switch for performing packet synchronized switch-over for virtual channel links, comprising:
a line interface device (1102) having a plurality of input and output ports connected to a plurality of virtual channel links (1104, 1106);
a switch fabric (1110), operatively coupled to the line interface card, for routing incoming cells received from incoming virtual channel links (1104) to outgoing virtual channel links (1106), **characterised in that** the cell relay switch comprises:
a switch controller (1120), operatively coupled to the line interface device (1102), for receiving a switch-over request, the switch-over request soliciting a change from a first virtual channel link to a second virtual channel link;
wherein the line interface device (1102) monitors state information of incoming cells to identify the occurrence of a frame completed state of a frame and initiates switch-over (702, 802) from the first virtual channel link to the second virtual channel link after the frame completed state occurs.

18. The cell relay switch of claim 17 wherein the state information is a middle of frame state until the frame completed state occurs.

19. The cell relay switch of claim 17 wherein the line interface device (1102) detects whether a current cell being received has a last cell indicator set.

20. The cell relay switch of claim 19 wherein the last cell indicator comprises an AUU bit.

21. The cell relay switch of claim 17 wherein the switch-over request comprises an ingress switch-over request for changing the first and second virtual channel links at an egress side of the cell relay switch.

22. The cell relay switch of claim 17 wherein the line interface device (1102) processes the forwarding of the frame through the first virtual channel link until the frame completed state is detected.

23. The cell relay switch of claim 17 wherein the switch-over request comprises an egress switch-over request for changing the first and second virtual channel links at an ingress side of the cell relay switch.

24. The cell relay switch of claim 22 wherein the line interface device (1102) receives cells on a first and second virtual channel link at the ingress side of the cell relay switch.

25. The cell relay switch of claim 24 wherein the line interface device (1102) discards all cells coming from the second virtual channel link until a frame complete state is detected on the first virtual channel link.

26. The cell relay switch of claim 24 wherein the line interface device (1102) discards all cells on the first virtual channel link after the frame completed state is detected on the first virtual channel link.

27. The cell relay switch of claim 24 wherein the cells being received on the first and second virtual channel links comprise separate connection identification.

28. The cell relay switch of claim 27 wherein the connection identification comprises an ATM layer indication.

29. The cell relay switch of claim 28 wherein the ATM layer identification comprises a virtual path identifier, and a virtual channel identifier.

30. The cell relay switch of claim 29 wherein the ATM layer identification further comprises a routing tag.

31. The cell relay switch of claim 17 wherein the line interface device (1102) monitors the ingress side of the cell relay switch.

32. The cell relay switch of claim 31 wherein the line interface device (1102) monitors state information for the second virtual channel link.

33. A cell relay intermediate entity providing packet synchronized switch-over for virtual channel links, **characterised by** comprising:
means (1120) for obtaining a switch-over request, the switch-over request soliciting a change from a first virtual channel link to a second virtual channel link;
means (1130), operatively coupled to the obtaining means (1120), for identifying the occurrence of a frame completed state; and
means (1102), operatively coupled to the identifying means, for performing switch-over (702, 802) from the first virtual channel link to the second virtual channel link after the frame completed state occurs.

## Patentansprüche

1. Verfahren zum Ausführen einer paketsynchronisierten Umschaltung für virtuelle Kanalverbindungen einer Zwischen-Cell-Relay-Einheit, **gekennzeichnet durch**:
- Empfangen einer Umschaltanfrage, wobei die Umschaltanfrage um eine Änderung von einer ersten virtuellen Kanalverbindung zu einer zweiten virtuellen Kanalverbindung nachsucht;
- Überwachen von Zustandsinformationen, um das Auftreten eines Rahmen-vervollständigt-Zustands eines Rahmens zu identifizieren; und
- Ausführen einer Umschaltung (702, 802) von der ersten virtuellen Kanalverbindung zu der zweiten virtuellen Kanalverbindung, nachdem der Rahmen-vervollständigt-Zustand auftritt.

2. Verfahren nach Anspruch 1, wobei die Zustandsinformationen eine Mitte eines Rahmenzustands ist, bis der Rahmen-vervollständigt-Zustand auftritt.

3. Verfahren nach Anspruch 1, wobei der Schritt des Überwachens von Zustandsinformationen, um das Auftreten eines Rahmen-vervollständigt-Zustands zu identifizieren, den Schritt des Erfassens umfasst, ob eine gegenwärtige Zelle, die empfangen wird, einen gesetzten letzte-Zelle-Indikator aufweist.

4. Verfahren nach Anspruch 3, wobei der letzte-Zelle-Indikator ein AUU-Bit umfasst.

5. Verfahren nach Anspruch 1, wobei die Umschaltanfrage eine Eingangs-Umschaltanfrage umfasst, zum Ändern der ersten und zweiten virtuellen Kanalverbindungen an einer Ausgangsseite der Einheit.

6. Verfahren nach Anspruch 5, wobei der Schritt des Überwachens von Zustandsinformationen, um das Auftreten eines Rahmen-vervollständigt-Zustand zu identifizieren, weiter den Schritt des Ausführens der Weiterleitung des Rahmens durch die erste virtuelle Kanalverbindung umfasst, bis der Rahmen-vervollständigt-Zustand erfasst wird.

7. Verfahren nach Anspruch 1, wobei die Umschaltanfrage eine Ausgangs-Umschaltanfrage umfasst, zum Ändern der ersten und zweiten virtuellen Kanalverbindungen an einer Eingangsseite der Einheit.

8. Verfahren nach Anspruch 7, weiter umfassend den Schritt des Empfangens von Zellen auf der ersten und zweiten virtuellen Kanalverbindung an der Eingangsseite der Umschalteinrichtung.

9. Verfahren nach Anspruch 8, weiter umfassend den Schritt des Verwerfens aller Zellen, die von der zweiten virtuellen Kanalverbindung kommen, bis ein Rahmen-vervollständigt-Zustand auf der ersten virtuellen Kanalverbindung erfasst wird.

10. Verfahren nach Anspruch 8, weiter umfassend den Schritt des Verwerfens aller Zellen auf der ersten virtuellen Kanalverbindung, nachdem der Rahmen-vervollständigt-Zustand auf der ersten virtuellen Kanalverbindung erfasst wird.

11. Verfahren nach Anspruch 8, wobei die Zellen, die auf der ersten und zweiten virtuellen Kanalverbindung empfangen werden, getrennte Verbindungsidentifikation umfassen.

12. Verfahren nach Anspruch 11, wobei die Verbindungsidentifikation eine ATM-Schicht-Identifikation umfasst.

13. Verfahren nach Anspruch 11, wobei die ATM-Schicht-Identifikation eine virtuelle Pfadkennung und eine virtuelle Kanal-Kennung umfasst.

14. Verfahren nach Anspruch 13, wobei die ATIVI-Schicht-Identifikation weiter ein Routing-Etikett umfasst.

15. Verfahren nach Anspruch 7, wobei der Schritt des Überwachens von Zustandsinformationen, um das Auftreten eines Rahmen-vervollständigt-Zustand zu identifizieren, weiter den Schritt des Durchführens des Überwachens an der Eingangsseite der Einheit umfasst.

16. Verfahren nach Anspruch 15, wobei der Schritt des Durchführens des Überwachens an der Eingangsseite der Umschalteinrichtung weiter den Schritt des Feststellens der Zustandsinformationen der zweiten virtuellen Kanalverbindung umfasst.

17. Cell-Relay-Umschalteinrichtung zum Ausführen einer paketsynchronisierten Umschaltung für virtuelle Kanalverbindungen, umfassend:
- eine Leitungsschnittstellen-Vorrichtung (1102), die mehrere Eingabe- und Ausgabeports aufweist, die mit mehreren virtuellen Kanalverbindungen (1104, 1106) verbunden sind:
- eine Umschaltstruktur (1110), die betriebsfähig mit der Leitungsschnittstellenkarte gekoppelt ist, zum Routen eingehender Zellen, die von eingehenden virtuellen Kanalverbindungen (1104) empfangen werden, an abgehende virtuelle Kanalverbindungen (1106), **dadurch gekennzeichnet, dass** die Cell-Relay-Umschalteinrichtung umfasst:
- eine Umschaltsteuerung (1120), die betriebsfähig mit der Leitungsschnittstellen-Vorrichtung (1102) gekoppelt ist, zum Empfangen einer Umschaltanfrage, wobei die Umschaltanfrage um eine Änderung von einer ersten virtuellen Kanalverbindung zu einer zweiten virtuellen Kanalverbindung nachsucht;
- wobei die L,eitungsschnittstellen-Vorrichtung (1102) Zustandsinformationen von eingehenden Zellen überwacht, um das Auftreten eines Rahmen-vervollständigt-Zustands eines Rahmens zu identifizieren und eine Umschaltung (702, 802) von der ersten virtuellen Kanalverbindung zu der zweiten virtuellen Kanalverbindung einleitet, nachdem der Rahmen-vervollständigt-Zustand auftritt.

18. Cell-Relay-Umschalteinrichtung nach Anspruch 17, wobei die Zustandsinformationen eine Mitte eines Rahmenzustands ist, bis der Rahmen-vervollständigt-Zustand auftritt.

19. Cell-Relay-Umschalteinrichtung nach Anspruch 17, wobei die Leitungsschnittstellen-Vorrichtung (1102) erfasst, ob eine gegenwärtige Zelle, die empfangen wird, einen gesetzten letzte-Zelle-Indikator aufweist.

20. Cell-Relay-Umschalteinrichtung nach Anspruch 19, wobei der letzte-Zelle-Indikator ein AUU-Bit umfasst.

21. Cell-Relay-Umschalteinrichtung nach Anspruch 17, wobei die Umschaltanfrage eine Eingangs-Umschaltanfrage umfasst, zum Ändern der ersten und zweiten virtuellen Kanalverbindungen an einer Ausgangsseite der Cell-Relay-Umschalteinrichtung.

22. Cell-Relay-Umschalteinrichtung nach Anspruch 17, wobei die Leitungsschnittstellen-Vorrichtung (1102) die Weiterleitung des Rahmens durch die erste virtuelle Kanalverbindung ausführt, bis der Rahmen-vervollständigt-Zustand erfasst wird.

23. Cell-Relay-Umschaltung nach Anspruch 17, wobei die Umschaltanfrage eine Ausgangs-Umschaltanfrage umfasst, zum Ändern der ersten und zweiten virtuellen Kanalverbindung an einer Eingangsseite der Cell-Relay-Umschalteinrichtung.

24. Cell-Relay-Umschalteinrichtung nach Anspruch 22, wobei die Leitungsschnittstellen-Vorrichtung (1102) Zellen auf einer ersten und zweiten virtuellen Kanalverbindung an der Eingangsseite der Cell-Relay-Umschalteinrichtung empfängt.

25. Cell-Relay-Umschalteinrichtung nach Anspruch 24, wobei die Leitungsschnittstellen-Vorrichtung (1102) alle Zellen, die von der zweiten virtuellen Kanalverbindung kommen, verwirft, bis ein Rahmen-vervollständigt-Zustand auf der ersten virtuellen Kanalverbindung erfasst wird.

26. Cell-Relay-Umschalteinrichtung nach Anspruch 24, wobei die Leitungsschnittstellen-Vorrichtung (1102) aller Zellen auf der ersten virtuellen Kanalverbindung verwirft, nachdem der Rahmen-vervollständigt-Zustand auf der ersten virtuellen Kanalverbindung erfasst wird.

27. Cell-Relay-Umschalteinrichtung nach Anspruch 24, wobei die Zellen, die auf der ersten und zweiten virtuellen Kanalverbindung empfangen werden, getrennte Verbindungsidentifikation umfassen.

28. Cell-Relay-Umschalteinrichtung nach Anspruch 27, wobei die Verbindungsidentifikation eine ATM-Schicht-Identifikation umfasst.

29. Cell-Relay-Umschalteinrichtung nach Anspruch 28, wobei die ATM-Schicht-Identifikation eine virtuelle Pfadkennung und eine virtuelle Kanal-Kennung umfasst.

30. Cell-Relay-Umschalteinrichtung nach Anspruch 29, wobei die ATM-Schicht-Identifikation weiter ein Routing-Etikett umfasst.

31. Cell-Relay-Umschalteinrichtung nach Anspruch 17, wobei die Leitungsschnittstellen-Vorrichtung (1102) die Eingangsseite der Cell-Relay-Umschalteinrichtung überwacht.

32. Cell-Relay-Umschalteinrichtung nach Anspruch 31, wobei die Leitungsschnittstellen-Vorrichtung (1102) Zustandsinformationen für die zweite virtuelle Kanalverbindung überwacht.

33. Cell-Relay-Zwischeneinheit, die eine paketsynchronisierte Umschaltung für virtuelle Kanalverbindungen bereitstellt, **gekennzeichnet dadurch, dass** sie umfasst:
- Mittel (1120) zum Erhalten einer Umschaltanfrage, wobei die Umschaltanfrage um eine Änderung von einer ersten virtuellen Kanalverbindung zu einer zweiten virtuellen Kanalverbindung nachsucht;
- Mittel (1130), die betriebsfähig mit den Erhalte-Mitteln (1120) gekoppelt sind, um das Auftreten eines Rahmen-vervollständigt-Zustand zu identifizieren; und
- Mittel (1102), die betriebsfähig mit den Identifikations-Mitteln gekoppelt sind, zum Ausführen einer Umschaltung (702, 802) von der ersten virtuellen Kanalverbindung zu der zweiten virtuellen Kanalverbindung, nachdem der Rahmen-vervollständigt-Zustand auftritt.

## Revendications

1. Procédé d'exécution d'une commutation synchronisée de paquets pour des liaisons de canaux virtuels d'une entité de relais de cellules intermédiaire, **caractérisé par** les étapes consistant à :
recevoir une demande de commutation, la demande de commutation sollicitant un changement d'une première liaison de canal virtuel à une seconde liaison de canal virtuel,
surveiller des informations d'état afin d'identifier la survenue d'un état de trame complète d'une trame, et
exécuter la commutation (702, 802) de la première liaison de canal virtuel à la seconde liaison de canal virtuel après que l'état de trame complète s'est produit.

2. Procédé selon la revendication 1, dans lequel les informations d'état sont une partie intermédiaire d'un état de trame jusqu'à ce que l'état de trame complète ait lieu.

3. Procédé selon la revendication 1, dans lequel l'étape consistant à surveiller les informations d'état pour identifier l'apparition d'un état de trame complète comprend l'étape détectant si une cellule en cours qui est reçue a un indicateur de dernière cellule armé.

4. Procédé selon la revendication 3, dans lequel l'indicateur de dernière cellule comprend un bit AUU.

5. Procédé selon la revendication 1, dans lequel la demande de commutation comprend une demande de commutation d'entrée destinée à changer les première et seconde liaisons de canaux virtuels du côté sortie de l'entité.

6. Procédé selon la revendication 5, dans lequel l'étape consistant à surveiller les informations d'état pour identifier l'apparition d'un état de trame complète comprend en outre l'étape consistant à traiter le transfert de la trame au travers de la première liaison de canal virtuel jusqu'à ce que l'état de trame complète soit détecté.

7. Procédé selon la revendication 1, dans lequel la demande de commutation comprend une demande de commutation de sortie destinée à changer les première et seconde liaisons de canaux virtuels du côté entrée de l'entité.

8. Procédé selon la revendication 7, comprenant en outre l'étape consistant à recevoir des cellules sur les première et seconde liaisons de canaux virtuels du côté entrée du commutateur.

9. Procédé selon la revendication 8, comprenant en outre l'étape consistant à rejeter toutes les cellules provenant de la seconde liaison de canal virtuel jusqu'à ce qu'un état de trame complète soit détecté sur la première liaison de canal virtuel.

10. Procédé selon la revendication 8, comprenant en outre l'étape consistant à rejeter toutes les cellules sur la première liaison de canal virtuel après que l'état de trame complète est détecté sur la première liaison de canal virtuel.

11. Procédé selon la revendication 8, dans lequel les cellules qui sont reçues sur les première et seconde liaisons de canaux virtuels comprennent une identification de connexion séparée.

12. Procédé selon la revendication 11, dans lequel l'identification de connexion comprend une identification de couche à mode ATM.

13. Procédé selon la revendication 11, dans lequel l'identification de couche à mode ATM comprend un identificateur de voie virtuelle et un identificateur de canal virtuel.

14. Procédé selon la revendication 13, dans lequel l'identification de couche à mode ATM comprend en outre une étiquette de routage.

15. Procédé selon la revendication 7, dans lequel l'étape consistant à surveiller les informations d'état pour identifier l'apparition d'un état de trame complète comprend en outre l'étape consistant à exécuter la surveillance du côté entrée de l'entité.

16. Procédé selon la revendication 15, dans lequel l'étape consistant à exécuter la surveillance du côté entrée du commutateur comprend en outre l'étape consistant à établir les informations d'état sur la liaison de canal virtuel.

17. Commutateur de relais de cellules destiné à exécuter une commutation synchronisée de paquets pour des liaisons de canaux virtuels, comprenant :
un dispositif d'interface de ligne (1102) comportant une pluralité de ports d'entrée et de sortie correspondant à une pluralité de liaisons de canaux virtuels (1104, 1106),
une structure de commutateur (1110), couplée fonctionnellement à la carte d'interface de ligne, destinée à acheminer des cellules entrantes reçues des liaisons de canaux virtuels entrantes (1104) vers les liaisons de canaux virtuels sortantes (1106), **caractérisé en ce que** le commutateur de relais de cellules comprend :
un contrôleur de commutateur (1120), couplé fonctionnellement au dispositif d'interface de ligne (1102), destiné à recevoir une demande de commutation, la demande de commutation sollicitant un changement d'une première liaison de canal virtuel à une seconde liaison de canal virtuel,
où le dispositif d'interface de ligne (1102) surveille les informations d'état de cellules entrantes pour identifier l'apparition d'un état de trame complète d'une trame et initie la commutation (702, 802) de la première liaison de canal virtuel à la seconde liaison de canal virtuel, après que l'état de trame complète est apparu.

18. Commutateur de relais de cellules selon la revendication 17, dans lequel les informations d'état représentent un état intermédiaire d'état de trame jusqu'à ce que l'état de trame complète apparaisse.

19. Commutateur de relais de cellules selon la revendication 17, dans lequel le dispositif d'interface de ligne (1102) détecte si une cellule en cours qui est reçue présente un indicateur de dernière cellule armé.

20. Commutateur de relais de cellules selon la revendication 19, dans lequel l'indicateur de dernière cellule comprend un bit AUU.

21. Commutateur de relais de cellules selon la revendication 17, dans lequel la demande de commutation comprend une demande de commutation d'entrée destinée à changer les première et seconde liaisons de canaux virtuels du côté sortie du commutateur de relais de cellules.

22. Commutateur de relais de cellules selon la revendication 17, dans lequel le dispositif d'interface de ligne (1102) traite le transfert de la trame au travers de la première liaison de canal virtuel jusqu'à ce que l'état de trame complète soit détecté.

23. Commutateur de relais de cellules selon la revendication 17, dans lequel la demande de commutation comprend une demande de commutation de sortie destinée à changer les première et seconde liaisons de canaux virtuels du côté entrée du commutateur de relais de cellules.

24. Commutateur de relais de cellules selon la revendication 22, dans lequel le dispositif d'interface de ligne (1102) reçoit des cellules sur une première et une seconde liaison de canaux virtuels du côté entrée du commutateur de relais de cellules.

25. Commutateur de relais de cellules selon la revendication 24, dans lequel le dispositif d'interface de ligne (1102) rejette toutes les cellules venant de la seconde liaison de canal virtuel jusqu'à ce qu'un état de trame complète soit détecté sur la première liaison de canal virtuel.

26. Commutateur de relais de cellules selon la revendication 24, dans lequel le dispositif d'interface de ligne (1102) rejette toutes les cellules sur la première liaison de canal virtuel après que l'état de trame complète a été détecté sur la première liaison de canal virtuel.

27. Commutateur de relais de cellules selon la revendication 24, dans lequel les cellules qui sont reçues sur les première et seconde liaisons de canaux virtuels comprennent une identification de connexion séparée.

28. Commutateur de relais de cellules selon la revendication 27, dans lequel l'identification de connexion comprend une identification de couche à mode ATM.

29. Commutateur de relais de cellules selon la revendication 28, dans lequel l'identification de couche à mode ATM comprend un identificateur de voie virtuelle, et un identificateur de canal virtuel.

30. Commutateur de relais de cellules selon la revendication 29, dans lequel l'identification de couche à mode ATM comprend en outre une étiquette de routage.

31. Commutateur de relais de cellules selon la revendication 17, dans lequel le dispositif d'interface de ligne (1102) surveille le côté entrée du commutateur de relais de cellules.

32. Commutateur de relais de cellules selon la revendication 31, dans lequel le dispositif d'interface de ligne (1102) surveille les informations d'état pour la seconde liaison de canal virtuel.

33. Entité de relais de cellules intermédiaire procurant une commutation synchronisée de paquets pour des liaisons de canaux virtuels **caractérisée par** le fait de comprendre :
un moyen (1120) destiné à obtenir une demande de commutation, la demande de commutation sollicitant un changement d'une première liaison de canal virtuel à une seconde liaison de canal virtuel,
un moyen (1130), couplé fonctionnellement au moyen d'obtention (1120), destiné à identifier l'apparition d'un état de trame complète, et
un moyen (1102), couplé fonctionnellement au moyen d'identification, destiné à exécuter une commutation (702, 802) de la première liaison de canal virtuel à la seconde liaison de canal virtuel après que l'état de trame complète est apparu.
